# EUROPEAN PATENT SPECIFICATION

(11) **EP 3 943 411 B1**
(45) Date of publication and mention of the grant of the patent: **09.09.2026**
(21) Application number: 20777037.1
(22) Date of filing: 19.03.2020
(51) Int. Cl.: B32B 7/12, B32B 27/08, B32B 27/10, B32B 27/32, B32B 27/36, B65D 65/40

(54) **PACKAGING MATERIAL AND PACKAGING BODY**
VERPACKUNGSMATERIAL UND VERPACKUNGSKÖRPER
MATÉRIAU D'EMBALLAGE ET CORPS D'EMBALLAGE

(30) Priority: 22.03.2019 JP 2019055594
(43) Date of publication of application: 26.01.2022
(73) Proprietor: TOPPAN INC., Tokyo 110-0016 (JP)
(72) Inventor: IMAI, Nobuhiko, Tokyo 110-0016 (JP); SUGIYAMA, Shigemi, Tokyo 110-0016 (JP)
(74) Representative: TBK
(86) International application number: PCT/JP2020/012391
(87) International publication number: WO 2020/196301

(56) References cited:
- WO-A1-2008/029733
- WO-A1-2014/043744
- WO-A1-2014/103866
- JP-A- 2008 094 051
- JP-A- 2016 068 533
- JP-A- 2017 052 909
- JP-A- 2017 052 909
- JP-A- 2017 226 423
- JP-A- 2018 122 562
- JP-A- 2018 122 562
- JP-A- H06 329 820

## Description

### TECHNICAL FIELD

The present invention relates to a packaging material and a packaging body. The present application claims priority to Japanese Patent Application No. 2019-055594 filed in Japan on March 22, 2019.

### BACKGROUND ART

Packaging materials for packaging solid, powder, and liquid contents such as foods, pharmaceuticals, toiletries and the like are mainly manufactured by laminating a thermally fusible film (hereinafter, referred to as a sealant layer) such as polyethylene or polypropylene on various stretched film substrates such as polyester, polyamide, polypropylene, or a metal foil substrate such as aluminum foil, using a polyurethane adhesive, for example. In particular, when the packaging material is required to have gas barrier performance, the packaging material is provided with a layer having excellent gas barrier performance such as a base material layer of an inorganic vapor deposition film and an ethylene-vinyl alcohol copolymer.

Since the contents packaged by the packaging material include various materials, the contents may have various effects depending on the characteristics of the contents.

For example, Patent Document 1 describes a gas-barrier packaging material that can prevent coloring of the packaging material even when the content is a coloring substance. Such a gas barrier packaging material is formed by laminating a base material layer, an adhesive layer, a gas barrier layer, an anchor coat layer, and a polyolefin-based resin layer in this order. The anchor coat layer of the laminate body is formed by applying an aqueous dispersion solution which is substantially free of a non-volatile water-forming aid and in which a polyolefin copolymer resin including an unsaturated carboxylic acid or an anhydride thereof in the range of 0.01% by mass to 5% by mass is dispersed such that a number-average particle size is 1 µm or less, and then, drying. In addition, the polyolefin-based resin layer is laminated on the surface of the melt-extruded polyolefin-based resin in contact with the anchor coat layer while being subjected to ozone treatment.

For example, Patent Document 2 describes a packaging bag for an alcohol-containing material that can safely seal and package a liquid having an alcohol concentration of 50% by mass or more or an impregnated product of the liquid. The packaging bag for alcohol-containing materials is formed by laminating a base material layer, an adhesive layer, a barrier layer, an anchor coat layer, and a polyolefin-based resin layer in this order. The barrier layer of this laminated body is an aluminum foil or a deposited film formed by depositing an aluminum oxide or a silicon oxide on a base film. The anchor coat layer is formed by applying an aqueous dispersion solution which is substantially free of a non-volatile water-forming aid and in which a polyolefin copolymer resin including an unsaturated carboxylic acid or an anhydride thereof in the range of 0.01% by mass to 5% by mass is dispersed such that a number-average particle size is 1 µm or less, and then, drying.

WO 2008/ 029733 A1 relates to a multilayer body in which at least one side of a plastic film base is subjected to a pretreatment by plasma, and a thermoplastic resin layer is directly formed on the pretreated side of the base.

JP 2018-122562 A relates to a gas barrier film laminate having a gas barrier coating layer which is formed of a water-soluble polymer and an inorganic compound and has a surface state satisfying specific conditions provided on at least one surface of a plastic film base material, and has an adhesive resin layer formed of modified polyolefin laminated on the gas barrier coating layer.

WO 2014/103866 A1 relates to film-like sealing material which is provided with: first and second adhesive resin layers which are adhesive to an object to be bonded; and a water vapor barrier resin layer which is arranged between the first adhesive resin layer and the second adhesive resin layer and contains a cycloolefin resin.

JP 2017-052909 A relates to an anchor coat agent for transparent vapor deposition containing an acid modified polyolefin resin (A), an epoxy silane coupling agent (B) and an aqueous medium, wherein a content of the (B) is 0.2 to 2 pts.mass based on 100 pts.mass of the (A) and the epoxy silane coupling agent (B) is preferably 3-glycidoxy propyltrimethoxysilane or 3-glycidoxypropyl methyldimethoxysilane.

JP 2017-226423 A relates to a paper container for liquid which is formed of such a laminate as to have a thin film layer made of at least an inorganic oxide on one surface of a polyester base material, to sequentially have an adhesive layer, an extrusion resin layer and a sealant layer on the thin film layer, and to sequentially have an adhesive layer , an extrusion resin layer, paper and a thermoplastic resin layer on the other surface of the polyester base material, where an MOR value of the polyester base materiel measured by a microwave permeable type molecular orientation meter is 1.00-1.25.

### PRIOR ART

### PATENT DOCUMENT

[Patent Document 1] Japanese Patent No. 5359079
[Patent Document 2] Japanese Patent No. 5415670

### DISCLOSURE OF INVENTION

### PROBLEMS TO BE SOLVED BY THE INVENTION

However, the conventional packaging materials and packaging bodies as described above have the following issues.

The contents packaged by the packaging material may include, for example, acidic/alkaline substances, fragrances, surfactants, high-boiling-point organic solvents, medicinal ingredients, alcohols, volatile substances and the like. Such contents are called highly permeable contents because they may cause a decrease in the lamination strength of the laminated body of the packaging material or cause peeling of the laminated body.

For example, the highly permeable content passes through the packaging material and swells and dissolves the polyurethane-based adhesive used for lamination, so that there is a problem in that the adhesive function of the polyurethane-based adhesive is deteriorated. In particular, when a barrier base material such as an aluminum foil or an inorganic vapor-deposited film base material is used as a portion of the packaging material, the adhesive function of the polyurethane-based adhesive tends to deteriorate.

It is considered that the reason for this is that the highly permeable content that has passed through the sealant layer is trapped by the barrier base material and accumulated in the polyurethane adhesive.

On the other hand, the techniques described in Patent Documents 1 and 2 are characterized in that even the contents containing a coloring substance or alcohol do not swell or dissolve as in the case where a urethane adhesive is used. However, the techniques described in Patent Documents 1 and 2 have restrictions on a suitable base material that can obtain adhesive strength, and in particular, the adhesive strength with an inorganic vapor-deposited film base material is weak, so that even if swelling or dissolution does not occur, there is a problem in that it is not suitable as a packaging material for accommodating highly permeable contents.

The present invention has been made in view of the above-described issues, and in a packaging material using an inorganic vapor-deposited film base material, even if the content to be packaged is highly permeable, it is an object of the present invention to provide a packaging material and a packaging body in which the decrease in laminate strength due to the influence of the highly permeable content is suppressed.

### MEANS FOR SOLVING THE PROBLEMS

In order to solve the above-described issues, the first aspect of the present invention is a packaging material including a base material made of a polymer resin composition, a gas barrier vapor deposition layer made of an inorganic compound, a gas barrier coating layer formed by using a compound including at least one compound selected from a metal alkoxide, a hydrolyzate of a metal alkoxide, and a polymer of a metal alkoxide, and a hydroxy group-containing polymer compound, an adhesive layer including an acid-modified polyolefin resin and a silane coupling agent, and formed in contact with the gas barrier coating layer, and a polyolefin sealant layer, in which the base material and the layers are laminated in the above order and wherein, if the polyolefin-based sealant layer (4E) is laminated by an extrusion lamination method, the extrusion lamination method has an extrusion temperature of 250°C to 330°C, and a coating amount of the adhesive layer (4D) after drying is 0.1 to 2.0 g/m².

In the packaging material of the first aspect, the gas barrier coating layer may be a composition formed by using a composition including at least one compound selected from a metal alkoxide, a hydrolyzate of a metal alkoxide, and a polymer of a metal alkoxide, and a hydroxy group-containing polymer compound, and further using at least one compound selected from an isocyanate derivative, a hydrolyzate of an isocyanate derivative, and a polymer of an isocyanate derivative.

In the packaging material of the first aspect, in the adhesive layer, the silane coupling agent may be 0.2 parts by mass or more and 2.0 parts by mass or less with respect to 100 parts by mass of the acid-modified polyolefin resin.

In the packaging material of the first aspect, the silane coupling agent may be an epoxy-based silane coupling agent.

In the packaging material of the first aspect, the epoxy-based silane coupling agent may be made of at least one compound selected from the group constituted by 3-glycidoxypropyltrimethoxysilane, 3-glycidoxypropylmethyldimethoxysilane, or 3-glycidoxypropyltriethoxysilane.

In the packaging material of the first aspect, the gas barrier vapor deposition layer may include at least one of silicon oxide and aluminum oxide.

In the packaging material of the first aspect, the metal alkoxide may be made of least one compound selected from the group constituted by tetraethoxysilane, tetramethoxysilane, and triisopropoxyaluminum.

In the packaging material of the first aspect, the coating amount of the adhesive layer after drying is 0.1 to 2.0 g/m².

The packaging material of the first aspect may further include a paper sheet.

The second aspect of the present invention is a packaging body including the packaging bag formed of the packaging material according to the first aspect, and a highly permeable content accommodated in the packaging bag and including a highly permeable material.

Another packaging body of the present invention includes a paper container for liquid formed of the packaging material of the first aspect described above, and a highly permeable content accommodated in the paper container for liquid and comprising a highly permeable material.

The third aspect of the present invention is a method of manufacturing a packaging material according to the first aspect.

In this method, the polyolefin-based sealant layer is laminated by an extrusion lamination method having an extrusion temperature of 250 °C to 330 °C.

### EFFECTS OF THE INVENTION

According to the packaging material and the packaging body of the present invention, even if the content to be packaged is highly permeable, it is possible to suppress decrease in the lamination strength due to the influence of the highly permeable content.

### BRIEF DESCRIPTION OF THE DRAWINGS

FIG. 1 is a schematic front view showing an example of the packaging body according to the first embodiment of the present invention.
FIG. 2 is a schematic cross-sectional view showing an example of the packaging material according to the first embodiment of the present invention.
FIG. 3 is a schematic cross-sectional view of the packaging material according to the second embodiment of the present invention.
FIG. 4 is a schematic cross-sectional view showing a modification example of the packaging material of the same.
FIG. 5 is a drawing showing an example of a paper container for liquid formed by the packaging material of the same.

### BEST MODE FOR CARRYING OUT THE INVENTION

The packaging body and packaging material of the first embodiment of the present invention will be described with reference to the accompanying drawings.

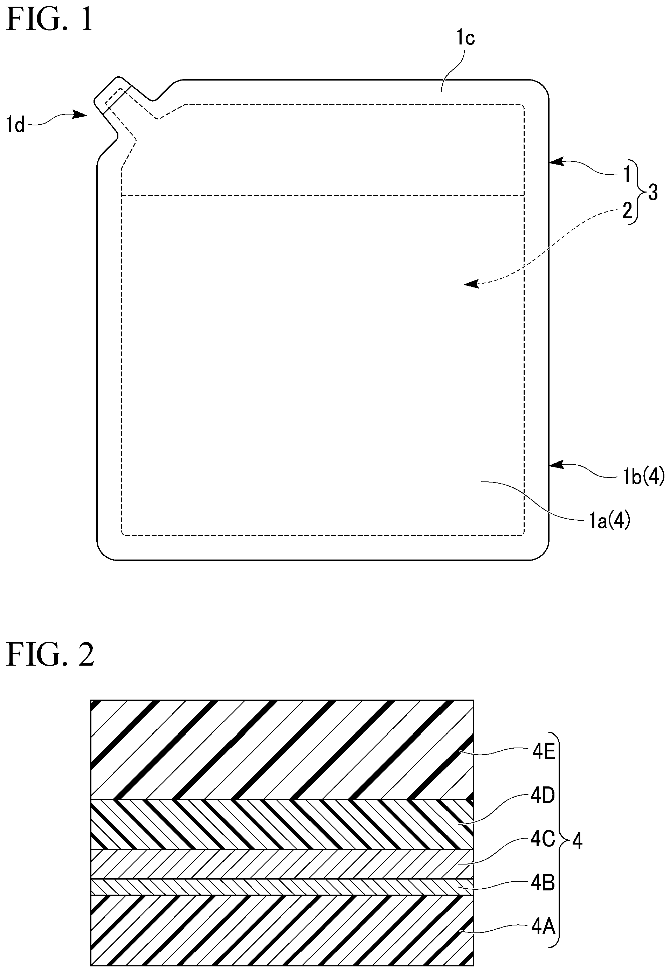

FIG. 1 is a schematic front view showing an example of a packaging body according to the present embodiment. FIG. 2 is a schematic cross-sectional view showing an example of the packaging material according to the present embodiment.

As shown in FIG. 1, the packaging body 3 of the present embodiment includes a packaging bag 1 and a highly permeable content 2.

In the example shown in FIG. 1, the packaging bag 1 is a flat bag in which a first lamination film 1a and a second lamination film 1b are heat-sealed. The front view shape of the packaging bag 1 is, as an example, a substantially rectangular shape. In FIG. 1, the first lamination film 1a is arranged on the front side shown in the drawing. The second lamination film 1b has an outer shape similar to that of the first lamination film 1a, and is arranged on the back side of the first lamination film 1a so as to overlap the first lamination film 1a.

At the corner portion of the packaging bag 1, a spout portion 1d constituting a flow path for pouring out the highly permeable content 2 when the packaging bag 1 is opened is formed. The spout portion 1d may be embossed such as in a linear shape, if necessary. If necessary, a pouring pipe which is not shown may be provided inside the spout portion 1d. The spout portion 1d may be provided with a notch for opening, a fragile portion serving as an auxiliary opening line, or the like, if necessary.

The packaging body 3 is manufactured by heat-sealing the opening portion in a state in which the highly permeable content 2 is injected into a bag body in which the three peripheries of the first lamination film 1a and the second lamination film 1b are heat-sealed.

However, the type of the packaging bag 1 is not limited to a flat bag as long as the highly permeable content 2 described later can be accommodated. For example, the packaging bag 1 used for the packaging body 3 may be a gusset pouch, a standing pouch, or the like.

The highly permeable content 2 in the present embodiment includes an appropriate highly permeable material. The highly permeable material is a substance having high permeability to the packaging material.

For example, when a highly permeable material is accommodated inside a packaging bag made of a lamination film, the strongly permeable material may permeate from the inner layer to the outer layer of the lamination film. A highly permeable material that has penetrated into the lamination film may deteriorate the lamination film. For example, a highly permeable material that has penetrated into a lamination film may corrode the film base material of the lamination film or decrease the adhesion strength between layers of the lamination film.

Examples of such highly permeable materials include acidic substances, alkaline substances, fragrances, surfactants, high boiling organic solvents, medicinal components, alcohols, volatile substances, and the like.

However, instead of the highly permeable content 2, the packaging bag 1 may include a content that does not include a strongly permeable material.

Therefore, examples of the contents that can be stored in the packaging bag 1 include edible agents, daily-use agents, pharmaceutical agents, industrial agents, reagents, and the like.

For example, examples of edible agents include milk, tea, coffee, edible oil, juice, soft drinks, carbonated drinks, liquor and other beverages, seasonings, edible oil, vinegar, dressings, spicy powder, curry powder, and the like.

For example, examples of household agents include detergents, toothpastes, hair tonics, hair restorers, shampoos, conditioners, perm solutions, cosmetics, bath salts, air fresheners, toiletries, floor waxes and the like.

For example, pharmaceutical agents include mouthwashes, poultices, disinfectants, and the like.

For example, examples of industrial agents include reagents, engine oils, motor oils, silicone oils, and the like.

For example, reagents include l-menthol, d-limonene, methyl salicylate, camphor, and the like.

As the first lamination film 1a and the second lamination film 1b, a lamination film 4 which is the packaging material of the present embodiment is used.

As shown in FIG. 2, the lamination film 4 is composed of at least a base material 4A, a gas barrier vapor deposition layer 4B, a gas barrier coating layer 4C, an adhesive layer 4D, and a polyolefin sealant layer 4E laminated in this order.

The lamination film 4 may include a layered portion other than the base material 4A, the gas barrier vapor deposition layer 4B, the gas barrier coating layer 4C, the adhesive layer 4D, and the polyolefin sealant layer 4E, if necessary. For example, the lamination film 4 may include a surface protection layer for improving the surface strength, a printing layer on which an image is formed, a coating layer for improving the adhesion strength between layers, and the like.

The base material 4A is a film material made of an appropriate polymer resin composition. For example, as the polymer resin material which is the main component of the base material 4A, there are a polyester resin such as polyethylene terephthalate (PET) and polyethylene naphthalate (PEN), a polyolefin resin such as polyethylene and polypropylene, a polystyrene resin, and 6,6-nylon such as polyamide resin, polycarbonate resin, polyacrylonitrile resin, polyimide resin, and the like.

As the base material 4A, a stretched film material may be used, or an unstretched film material may be used. As the base material 4A, it is more preferable to use a film material stretched in the biaxial direction.

As the base material 4A, a polyamide film, a polyester film, or a polypropylene film is more preferably used from the viewpoints of moisture resistance, filling suitability, easy opening property, impact resistance, texture, disposability, and the like. It is particularly preferable that a polyester film be used as the base material 4A.

The base material 4A may include various well-known additives. For example, additives such as stabilizers, antistatic agents, plasticizers, lubricants, and antioxidants may be used in the base material 4A, if necessary.

The thickness of the base material 4A is not particularly limited. The thickness of the base material 4A may be 3 µm or more and 200 µm or less from the viewpoint of processability and filling suitability. The thickness of the base material 4A is more preferably 6 µm or more and 30 µm or less.

In order to improve the adhesion between the base material 4A and the gas barrier vapor deposition layer 4B described later, the surface of the base material 4A may be subjected to corona treatment, plasma treatment, ozone treatment or the like as pretreatment. In addition, the surface of the base material 4A may be subjected to chemical treatment, solvent treatment, or the like.

In particular, since the gas barrier vapor deposition layer 4B and the base material 4A, which will be described later, are firmly adhered to each other when the plasma treatment is applied, it is more preferable that the base material 4A be subjected to the plasma treatment.

Similarly, a coating layer may be provided in order to improve the adhesion between the base material 4A and the gas barrier vapor deposition layer 4B described later.

Materials for the coating layer include at least one compound selected from the group of organic compounds obtained by the reaction of polyols and isocyanate compounds, organic compounds having urea bonds by the reaction of polyisocyanate compounds with water, polyethyleneimine and derivatives thereof, polyolefin-based emulsions, polyimides, melamines, phenol, inorganic silica, and organic silane compounds.

Examples of the polyols include acrylic polyols, polyvinyl acetals, polystyrene polyols, polyurethane polyols, and the like.

As the isocyanate compound, monomers such as aromatic-based toluene diisocyanate (TDI) and diphenylmethane diisocyanate (MDI), aliphatic-based xylene diisocyanate (XDI) and hexylene diisocyanate (HMDI), and polymers or derivatives thereof are used, and these may be used alone or as a mixture and the like. High adhesion to the base material 4A or the gas barrier vapor deposition layer 4B can be obtained by the urethane bond formed by the reaction of the acrylic polyol and the isocyanate compound.

Examples of inorganic silica include organically modified colloidal silica and the like.

Examples of the organic silane compound include a silane coupling agent and a hydrolyzate thereof.

Particularly preferable materials for the coating layer include a composition including: a trifunctional organosilane represented by the general formula R'Si(OR)₃ (R': alkyl group, vinyl group, glycidoxypropyl group, and the like, R: alkyl group, and the like) or a hydrolyzate of the above-described trifunctional organosilane; and a composite of an acrylic polyol and an isocyanate compound. Examples of the trifunctional organosilane include ethyltrimethoxysilane, vinyltrimethoxysilane, glycidoxypropyltrimethoxysilane, and the like. Among them, glycidoxytrimethoxysilane, epoxycyclohexylethyltrimethoxysilane, and the like which include an epoxy group in R' are particularly preferable because they can obtain particularly high adhesion between the base material 4A and the gas barrier vapor deposition layer 4B. The hydrolyzate can be obtained by a known method such as a method of adding an acid, an alkali or the like to trifunctional organosilane to carry out the hydrolysis.

It is also possible to add various additives such as a curing accelerator, an antioxidant, a leveling agent, a flow conditioner, a catalyst, a cross-linking reaction accelerator, a filler and the like to these coating materials.

The thickness of the coating layer is preferably in the range of 0.01 µm to 2.0 µm. If the thickness is thinner than 0.01 µm, it is difficult to obtain a uniform coating film, and the adhesion may decrease. In addition, when the thickness exceeds 2.0 µm, the coating film cannot maintain the flexibility because the film is thick, and the coating film may be cracked due to an external factor, which is not preferable. Particularly preferable is that the range be within from 0.05 µm to 0.5 µm.

Examples of the method of forming the coating layer which can be used include well-known coating methods such as a dipping method, roll coating, gravure coating, reverse coating, air knife coating, comma coating, die coating, and a screen printing method, and spray coating, or a well-known printing method such as an offset printing method, a gravure printing method, a silk screen printing method, and the like. As for the drying conditions, generally used conditions may be used.

The gas barrier vapor deposition layer 4B is composed of an inorganic compound having a gas barrier performance. In the example shown in FIG. 2, the gas barrier vapor deposition layer 4B is laminated on the base material 4A.

Examples of the inorganic compound include oxides, nitrides, and fluorides such as silicon, aluminum, titanium, zirconium, tin, and magnesium, which may be one kind of substance or a mixture of a plurality of substances.

Aluminum oxide or silicon oxide is particularly preferable for the gas barrier vapor deposition layer 4B. Since they have excellent transparency and water resistance to boiling and retort sterilization treatment while maintaining gas barrier performance, aluminum oxide or silicon oxide is preferable for the gas barrier vapor deposition layer 4B.

The degree of oxidation of the vapor deposition layer of aluminum oxide or silicon oxide may not be limited as long as the gas barrier performance, transparency and the like are not impaired.

The thickness of the gas barrier vapor deposition layer 4B is preferably 5 nm or more and 300 nm or less.

If the thickness exceeds 300 nm, the flexibility may decrease and cracks may easily occur. Therefore, it is more preferably 5 nm or more and 300 nm or less.

Methods of forming the gas barrier vapor deposition layer 4B include a vacuum deposition method such as resistance heating type, induction heating type, and EB heating type, a reactive vapor deposition method carrying out film formation in the presence of oxygen, or mixed gas of carbon dioxide gas, an inert gas, and the like, a reactive sputtering method, a reactive ion plating method, and a plasma vapor deposition method (CVD).

The gas barrier coating layer 4C is a layer formed by coating a gas barrier vapor deposition layer 4B with a coating agent and heat-drying. The coating agent is a mixed agent where at least one selected from a metal alkoxide or a polymer of a metal alkoxide hydrolyzed in advance and a metal alkoxide is mixed to an aqueous solution including a hydroxy group-containing polymer compound or a mixed solution of water and an alcohol.

Examples of the hydroxy group-containing polymer compound used in the gas barrier coating layer 4C include polyvinyl alcohol, polyvinylpyrrolidone, starch, methyl cellulose, carboxymethyl cellulose, sodium alginate, ethylene-vinyl alcohol copolymer, and the like. Preferably, polyvinyl alcohol (hereinafter referred to as PVA) having a good gas barrier performance is preferable.

The metal alkoxide used in the above-described gas barrier coating layer 4C can be represented by a general formula, M(OR)n (M: metals such as Si, Ti, Ai, and Zr, R: alkyl group such as CH₃, and C₂H₅).

As specific examples, tetraethoxysilane [Si(OC₂H₅)₄], tetramethoxysilane [Si(OCH₃)₄], triisopropoxyaluminum [Al(O-2'-C₃H₇)₃] and the like represented by the general formula Si(OR¹)₄ [general formula (1)] (where in the general formula (1), R¹ represents CH₃, C₂H₅, or C₂H₄OCH₃) are preferable because they are relatively stable in an aqueous solvent after hydrolysis. The hydrolyzate can be obtained by a known method such as a method of adding an acid, an alkali or the like to a metal alkoxide to hydrolyze the metal alkoxide.

In the gas barrier coating layer 4C, a coating agent is an original material that is a mixed agent where at least one selected from a metal alkoxide or a polymer of a metal alkoxide hydrolyzed in advance and a metal alkoxide is mixed to an aqueous solution including a hydroxy group-containing polymer compound or a mixed solution of water and an alcohol. The metal alkoxide is a highly reactive inorganic component that hydrolyzes and polycondenses in a solution to form a chain or three-dimensional dendritic polymer, and the polymerization further proceeds by evaporation of the solvent with drying and heating.

When a strong hydrogen bond is formed between the hydroxy group of the hydroxy group-containing polymer compound and the hydroxy group of the hydrolyzate of the metal alkoxide and the metal oxide shrinks and polymerizes, the hydroxy group-containing polymer compounds are dispersed between the metal oxides. Therefore, the film structure is close to a ceramic film, and the gas barrier coating layer 4C itself exhibits high gas barrier performance.

When the gas barrier coating layer 4C described above requires water resistance and heat resistance such as boil sterilization heat treatment and high temperature and high pressure sterilization treatment, the gas barrier coating layer 4C can be formed by coating and heat-drying a solution where at least one compound selected from a silicon compound represented by the general formula (R²Si(OR³)₃)ₙ [general formula (2)] (where in the general formula (2), R² represents an organic functional group and R³ represents CH₃, C₂H₅, or C₂H₄OCH₃), hydrolysate thereof, and polymers thereof are newly added and further mixed to a coating agent in which at least one selected from a metal alkoxide or a polymer of a metal alkoxide hydrolyzed in advance and a metal alkoxide is mixed to an aqueous solution including a hydroxy group-containing polymer compound or a mixed solution of water and an alcohol.

The organic functional group R² in the general formula (2) is more preferably selected from non-aqueous functional groups such as vinyl, epoxy, methacryloxy, ureido, and isocyanate. Since the functional group of the non-aqueous functional group is hydrophobic, the water resistance is further improved.

The silicon compound represented by the general formula (2) is preferably a composition formed by using at least one compound selected from an isocyanate derivative, a hydrolyzate of an isocyanate derivative, and a polymer of an isocyanate derivative.

When the silicon compound represented by the general formula (2) is a multimer, a trimer is preferable. In particular, it is 1,3,5-tris (3-trialkoxysilylalkyl) represented by the general formula (NCO-R⁴Si(OR³)₃)₃ (R⁴ in the formula is (CH₂)n, n is 1 or more), which is a condensate of 3-isocyanate alkylalkoxysilane.

The 1,3,5-tris (3-trialkoxysilylalkyl)isocyanurate is more preferably 1,3,5-tris (3-trialkoxysilylpropyl)isocyanurate, and even more preferably 1,3,5-tris (3-trimethoxysilylpropyl)isocyanurate.

The hydrolyzate can be obtained by a known method such as a method of adding an acid, an alkali, or the like to the silicon compound represented by the general formula (2) to carry out the hydrolysis.

It is known that although the isocyanurate portion is not chemically reactive, the 1,3,5-tris (3-trialkoxysilylalkyl)isocyanurate exhibits the same performance as such a reaction depending on the polarity of the nurate portion. In general, it is added to an adhesive or the like similarly as 3-isocyanate alkylalkoxysilane, and is known as an adhesiveness improver. Therefore, by adding 1,3,5-tris (3-trialkoxysilylalkyl)isocyanurate to Si(OR¹)₄ and the hydroxy group-containing polymer compound, based on hydrogen bonds, it is possible to prevent the gas barrier coating layer 4C from swelling due to water, and water resistance can be improved.

In addition, 3-isocyanate alkylalkoxysilane has high reactivity and low liquid stability, whereas the nurate portion is not water-soluble due to the polarity thereof, but it easily disperses in an aqueous liquid and keeps the liquid viscosity stable, and water resistance performance thereof is equivalent to that of 3-isocyanate alkylalkoxysilane. Furthermore, not only does the nurate portion have water resistance, but also Si(OR¹)₄ and the water-soluble polymer having a hydroxyl group are less likely to form barrier pores due to the polarity thereof.

In addition, as the organic functional group R² of the general formula (2), a 3-glycidoxypropyl group or a 2-(3,4 epoxycyclohexyl) group can be preferably used. Since these organic functional groups form hydrogen bonds with Si(OR¹)₄ of the general formula (1) and the hydroxy group-containing polymer compound by hydrolysis, they are unlikely to form barrier pores and impair gas barrier performance and water resistance can be improved.

In the descriptions of the above-described embodiment, an example where the metal element of the metal alkoxide is silicon has been described; however, the metal of the metal alkoxide is not limited to silicon. The metal of the metal alkoxide may be, for example, aluminum.

Furthermore, to the gas barrier coating layer 4C, known additives such as an isocyanate compound, a silane coupling agent, or a dispersant, a stabilizer, a viscosity regulator, and a colorant can be added as long as the barrier performance is not impaired.

For example, as the isocyanate compound added to the coating agent, in a molecule thereof, a compound having two or more isocyanate groups (NCO groups) may be used. Examples of the isocyanate compound include monomers such as tolylene diisocyanate (hereinafter referred to as TDI), triphenylmethane triisocyanate (hereinafter referred to as TTI), and tetramethylxylene diisocyanate (hereinafter referred to as TMXDI), and polymers thereof, derivatives thereof, and the like may be used.

The thickness of the gas barrier coating layer 4C varies depending on the kinds of coating agent; however, for example, the thickness after drying may be in the range of approximately 0.01 µm to 100 µm. If the thickness is 50 µm or more, cracks are likely to occur in the film, so that the thickness of the film after drying is more preferably 0.01 µm to 50 µm.

Examples of methods of applying the gas barrier coating agent which can be used include well-known coating methods such as a dipping method, roll coating, gravure coating, reverse coating, air knife coating, comma coating, die coating, and a screen printing method, and spray coating, or a well-known printing method such as an offset printing method, a gravure printing method, a silk screen printing method, and the like.

The gas barrier coating layer 4C is laminated on the gas barrier vapor deposition layer 4B to fill and reinforce defects or micro-pores such as pinholes, cracks, and grain boundaries that occur in the gas barrier vapor deposition layer 4B, thereby a dense structure is formed, which serves as a protection layer for improving the gas barrier performance and the gas barrier vapor deposition layer 4B.

In addition, the gas barrier coating layer 4C also has excellent adhesion to the adhesive layer 4D described later.

The adhesive layer 4D is formed by applying an aqueous medium coating liquid including an acid-modified polyolefin resin and a silane coupling agent to the gas barrier coating layer 4C and then heating and drying the adhesive layer 4D, and adheres the gas barrier coating layer 4C and the polyolefin sealant layer 4E which will be described later to each other. Here, the aqueous medium refers to water or a mixed solution of water and an organic solvent.

The acid-modified polyolefin resin used for the adhesive layer 4D includes an olefin component as a main component and is acid-modified with an unsaturated carboxylic acid component.

Examples of the acid-modified polyolefin resin include ethylene-(meth)acrylic acid copolymer, ethylene-(meth)acrylic acid-maleic anhydride copolymer, ethylene-acrylic acid ester-maleic anhydride copolymer, acid anhydride-modified polyethylene, acid anhydride-modified polypropylene, acid anhydride-modified ethylene-propylene resin, acid anhydride-modified ethylene-butene resin, acid anhydride-modified propylene-butene resin, or acid anhydride-modified ethylene-propylene-butene resin, or examples of these acid-modified resins include those further acrylic-modified with an acrylic acid ester or the like. In addition, the acid-modified polyolefin resin may be chlorinated in the range of 5% by mass or more and 40% by mass or less.

The type of the silane coupling agent contained in the adhesive layer 4D is not particularly limited. For example, examples of the silane coupling agent suitable for the adhesive layer 4D include an epoxy-based silane coupling agent, a vinyl-based silane coupling agent, a styryl-based silane coupling agent, a methacrylic-based silane coupling agent, and an acrylic-based silane coupling agent, amino-based silane coupling agents, isocyanurate silane coupling agents, ureido-based silane coupling agents, mercapto-based silane coupling agents, isocyanate-based silane coupling agents, and acid anhydride-based silane coupling agents. As the silane coupling agent, it is more preferable to use an epoxy-based silane coupling agent.

The content of the silane coupling agent in the adhesive layer 4D may be 0.2 parts by mass or more and 2.0 parts by mass or less with respect to 100 parts by mass of the acid-modified polyolefin resin, preferably 0.2 parts by mass or more and 1.5 parts by mass, and particularly preferably 0.5 parts by mass or more and 1.0 parts by mass or less.

If the content of the silane coupling agent is less than 0.2 parts by mass, the adhesion to the gas barrier coating layer 4C and the olefin sealant layer may be inferior. If the content of the silane coupling agent exceeds 2 parts by mass, since the liquid stability of the coating liquid is inferior, there is a possibility that it cannot be uniformly applied onto the object to be applied.

Examples of the compound that can be used as a silane coupling agent include 3-glycidoxypropylmethyldimethoxysilane, 2-(3,4-epoxycyclohexyl)ethyltrimethoxysilane, 3-glycidoxypropyltrimethoxysilane, 3-glycidoxypropylmethyldiethoxysilane, or 3-glycidoxypropyltriethoxysilane. Among them, in order to form an adhesive layer 4D having excellent adhesion to the gas barrier coating layer 4C and the olefin sealant layer, 3-glycidoxypropylmethyldimethoxysilane, 3-glycidoxypropyltrimethoxysilane, or 3-glycidoxypropyltriethoxysilane is more preferably used as the silane coupling agents.

The thickness of the adhesive layer 4D (application amount after drying) is not particularly limited as long as adhesion can be obtained; however, from the viewpoint of processability, it is 0.1 g/m² or more and 2.0 g/m² or less. In particular, when laminating by the extrusion lamination method, it is more preferably 0.3 g/m² or more and 1.0 g/m² from the viewpoint of content resistance.

Examples of the coating method of the adhesive layer 4D which can be used include well-known coating methods such as a dipping method, roll coating, gravure coating, reverse coating, air knife coating, comma coating, die coating, and a screen printing method, and spray coating, or a well-known printing method such as an offset printing method, a gravure printing method, a silk screen printing method, and the like.

The polyolefin-based sealant layer 4E is a layered portion for heat-sealing the lamination films 4 to each other. The polyolefin-based sealant layer 4E is formed on the outermost layer of the lamination film 4.

Examples used for constituting the resin constituting the polyolefin-based sealant layer 4E are a single substance or a blend of two or more resins selected from the following including polyethylene-based resins such as low-density polyethylene (LDPE), linear low-density polyethylene (LLDPE), medium-density polyethylene (MDPE), high-density polyethylene (HMPE), and ethylene-a olefin polymers, and the like, polypropylene-based resins such as homopolypropylene resins, propylene-ethylene random copolymers, propylene-ethylene block copolymer resins, propylene-α-olefin copolymers, and further, ethylene-α, β-unsaturated carboxylic acid copolymers such as ethylene-acrylic acid copolymer (EAA) and ethylene-methacrylic acid copolymer (EMAA), copolymers with esterified products of ethylene-α, β unsaturated carboxylic acid copolymers such as ethylene-methyl acrylate, ethylene-ethyl acrylate, ethylene-methyl methacrylate, and ethylene-ethyl methacrylate, ion-crosslinked products of ethylene-α, β-unsaturated carboxylic acid copolymer in which the carboxylic acid moiety is crosslinked with sodium ion or zinc ion, modified polyolefin resins obtained by acid-modifying olefin resins such as ethylene-maleic anhydride graft polymers and acid anhydride-modified polyolefins represented by ternary copolymers such as ethylene-ethyl acrylate-maleic anhydride by graft polymerization or the like, epoxy compound-modified polyolefins such as ethylene-glycidyl methacrylate copolymer, and ethylene-vinyl acetate copolymers.

The thickness of the polyolefin-based sealant layer 4E may be determined to be an appropriate thickness, for example, according to the seal width, required strength, contents, and the like of the heat-sealed portion 1c in the packaging bag 1. For example, the thickness of the polyolefin-based sealant layer 4E may be 3 µm or more and 200 µm or less.

Examples of methods for forming the polyolefin-based sealant layer 4E include a dry lamination method in which a film-like resin made of the above-described resin is bonded using a two-component curable urethane-based adhesive, a non-solvent dry lamination method in which a film-like resin made of the above-described resin is bonded using a solvent-free adhesive, an extrusion lamination method in which a film-like resin made of the above-described resin is heated and melted, extruded into a curtain shape, and bonded together.

As a method of forming the polyolefin-based sealant layer 4E, in particular, a back lamination method in which the above-described resins are bonded by single-layer melt extrusion or two or more types of covalent melt extrusion by an extrusion lamination method, or a sand lamination method which melt-extrudes to an inner side of a polyolefin-based sealant film, which is more preferable because heat-bonding onto the adhesive layer 4D at a high temperature is possible and the adhesion is further improved.

The resin temperature under the T-die when the polyolefin-based sealant layer 4E is melt-extruded onto a surface of the adhesive layer 4D by the extrusion lamination method is 250 °C to 330 °C. When the temperature is 250 °C or lower, the adhesive strength with the adhesive layer 4D decreases due to insufficient oxidation of the extruded polyolefin resin. When the temperature is 330 °C or higher, the cohesive force of the extruded resin decreases, and the adhesive strength with the adhesive layer 4D decreases.

In addition, it is also possible to perform ozone treatment by flowing ozone in or near the portion where the resin extruded from the T-die and the adhesive layer 4D come into contact with each other, or to perform surface activation treatment such as corona treatment for bonding.

The above-described adhesive layer 4D is applied onto the gas barrier coating layer 4C and dried in advance in one step, and in another step, the polyolefin sealant layer 4E is melt-extruded and bonded by an extrusion lamination method or the like. In such a manner, the step of forming the adhesive layer 4D and the step of melt-extruding and bonding the polyolefin sealant layer 4E may be separate methods.

In addition, the adhesive layer 4D is applied onto the gas barrier coating layer 4C and dried, and sequentially in the same step, the polyolefin sealant layer 4E is melt-extruded and bonded in the same step such as an extrusion lamination method or the like.

If necessary, after the lamination film 4 is formed, heating and pressurization may be performed by a thermal lamination method to further strengthen the adhesive strength.

In the base material 4A, a relaxation layer such as stretched nylon, stretched polyester, and stretched polypropylene may be provided on the surface opposite to the gas barrier vapor deposition layer. When such a relaxation layer is provided, the pinhole resistance, impact resistance, heat resistance, and the like of the lamination film 4 are improved.

The lamination film 4 is formed by laminating the base material 4A, the gas barrier vapor deposition layer 4B, the gas barrier coating layer 4C, the adhesive layer 4D, and the polyolefin sealant layer 4E described above in this order. However, if other layered portions are provided as needed, they are laminated in this order with the other layered portions interposed therebetween. The formation order and formation unit of each layered portion are not particularly limited.

In order to manufacture the packaging bag 1, the lamination film 4 is first cut so as to have the outer shapes of the first lamination film 1a and the second lamination film 1b, respectively. In addition, the first lamination film 1a and the second lamination film 1b are laminated so that the polyolefin-based sealant layers 4E face each other. The three outer peripheral portions of the lamination bodies of the first lamination film 1a and the second lamination film 1b are heat-sealed by a heat-sealing device. As a result, the packaging bag 1 opened on one side is manufactured. When a fragile portion such as an opening auxiliary line is provided in the spout portion 1d of the packaging bag 1, the fragile portion is formed at any timing until the packaging bag 1 is formed. For the processing of the fragile portion, for example, laser processing or the like may be used.

Once the packaging bag 1 is manufactured, the highly permeable content 2 is filled through the opening portion. After that, the opening portion of the packaging bag 1 is heat-sealed by the heat-sealing device. In such a manner, the heat-sealed portion 1c is formed on the entire circumference of the outer peripheral portion of the packaging bag 1. As a result, the packaging bag 1 is sealed and the packaging body 3 is manufactured.

Next, the operations of the lamination film 4 and the packaging bag 1 of the present embodiment will be described.

As described above, the lamination film 4 includes a gas barrier vapor deposition layer 4B having a gas barrier performance, a gas barrier coating layer 4C, and an adhesive layer 4D between the base material 4A and the polyolefin sealant layer 4E, respectively.

The gas barrier performance of the gas barrier performance of the vapor deposition layer 4B is obtained by the inorganic compounds included in the gas-barrier deposition layer 4B forming a dense layer structure.

Since such a layer of an inorganic compound is hard but brittle, cracks are likely to occur when the lamination film 4 is bent to act an external force. Cracks cause a decrease in gas barrier performance.

In the present embodiment, the gas barrier vapor deposition layer 4B is further coated with the gas barrier coating layer 4C.

In the gas barrier coating layer 4C, for example, when the silicon compound of the general formula (1) is hydrolyzed, a strong hydrogen bond between the hydroxy group of the hydrolyzate of the silicon compound and the hydroxy group of the hydroxy group-containing polymer compound is formed. Therefore, in the gas barrier coating layer 4C, a hydroxy group-containing polymer compound having flexibility is dispersed in a dense network of silicon compounds. Since the hydroxy group-containing polymer compound binds to a site derived from the arrangement of the functional group of the silicon compound of the general formula (1), it is dispersed over a wide range uniformly. As a result, it is difficult to form holes in the film structure through which the gas can easily pass as described above.

As described above, since the gas barrier vapor deposition layer 4B is coated with the gas barrier coating layer 4C having gas-barrier performance and flexibility, the gas-barrier performance of the lamination film 4 is further improved by the synergistic effect.

According to the lamination film 4, the penetration of the highly permeable material is suppressed in such a manner.

In addition, in the gas barrier coating layer 4C, a hydroxy group formed by hydrolyzing the silicon compound of the general formula (2) forms a strong hydrogen bond with a hydroxy group of the hydrolyzate of the silicon compound of the general formula (1) and a hydroxy group of the hydroxy group-containing polymer. On the other hand, the hydrophobic organic functional group of the general formula (2) is prevented from swelling even if water is added to the hydrogen bond of the hydroxyl-group containing polymer compound by forming a network. Therefore, the water resistance of the film structure is remarkably improved.

In the present embodiment, at the bonding portion between the gas barrier coating layer 4C and the adhesive layer 4D, strongly polarized silanol groups resulting from the silicon compounds included in the general formulas (1) and (2) in the gas barrier coating layer 4C are hydrolyzed, respectively, and form a strong bond by interacting with strongly polarized epoxy groups of the epoxy-based silane coupling agent of the adhesive layer 4D. As a result, the gas barrier coating layer 4C and the adhesive layer 4D can maintain the adhesive strength to each other even when the highly permeable substance of the highly permeable content reaches them.

In addition, the highly polarized hydroxy group of the hydroxy group-containing polymer compound of the gas barrier coating layer 4C generates a strong bond by interacting with the strongly polarized epoxy group of the epoxy-based silane coupling agent of the adhesive layer 4D. As a result, the gas barrier coating layer 4C and the adhesive layer 4D can also maintain the adhesive strength with each other even when the highly permeable substance of the highly permeable content reaches them.

In addition, since the polyolefin resin component of the acid-modified polyolefin resin in the adhesive layer 4D and the polyolefin resin in the polyolefin sealant layer 4E are the same resin type, strong adhesive strength is created, and the adhesive layer 4D and the polyolefin sealant layer 4E can maintain adhesive strength even when the highly permeable substance of the highly permeable content arrives.

As described above, according to the packaging material and the packaging body of the present embodiment, even if the content to be packaged is highly permeable, a decrease in lamination strength due to the influence of the highly permeable content is suppressed.

### EXAMPLES

Hereinafter, Examples 1 to 8 of the lamination film 4 and the packaging body 3 of the above-described embodiment will be described together with Comparative Examples 1 to 5. The following Table 1 shows the layer structure of the packaging materials, the types of contents, and the evaluation results in Examples 1 to 8 and Comparative Examples 1 to 5. However, in Table 1, the reference numerals of each layer are omitted.

**(Table 1)**

| | | | | | | | | | | EVALUATION | |
|---|---|---|---|---|---|---|---|---|---|---|---|
| | SURFACE TREATMENT OF BASE MATERIAL | VAPOR-DEPOSITED MATERIAL HAVING GAS BARRIER PERFORMANCE | COATING-LAYER MATERIAL HAVING GAS BARRIER PERFORMANCE | ADHESIVE LAYER | | SEALANT LAYER | | | | LAMINATION STRENGTH | WATER VAPOR BARRIER PERFORMANCE |
| | | | | MATERIAL | COATING AMOUNT (g/m²) | LAMINATION METHOD | MATERIAL | RESIN TEMPERATURE (°C) | THICKNESS (µm) | | |
| EXAMPLE 1 | NA | ALUMINIUM OXIDE | COMPOSITION a | COMPOSITION A | 0. 5 | EXTRUSION LAMINATION | LDPE | 290 | 20 | ○ | ○ |
| EXAMPLE 2 | NA | ALUMINIUM OXIDE | COMPOSITION a | COMPOSITION B | 0.5 | EXTRUSION LAMINATION | LDPE | 290 | 20 | ○ | ○ |
| EXAMPLE 3 | NA | ALUMINIUM OXIDE | COMPOSITION a | COMPOSITION C | 0.5 | EXTRUSION LAMINATION | LDPE | 290 | 20 | ○ | ○ |
| EXAMPLE 4 | NA | SILICON OXIDE | COMPOSITION a | COMPOSITION A | 0.5 | EXTRUSION LAMINATION | LDPE | 290 | 20 | ○ | ○ |
| EXAMPLE 5 | COATING LAYER | ALUMINIUM OXIDE | COMPOSITION a | COMPOSITION A | 0. 5 | EXTRUSION LAMINATION | LDPE | 290 | 20 | ○ | ○ |
| EXAMPLE 6 | OXYGEN PLASMA TREATMENT | ALUMINIUM OXIDE | COMPOSITION a | COMPOSITION A | 0. 5 | EXTRUSION LAMINATION | LDPE | 290 | 20 | ○ | ○ |
| EXAMPLE 7 | NA | ALUMINIUM OXIDE | COMPOSITION b | COMPOSITION A | 0.5 | EXTRUSION LAMINATION | LDPE | 290 | 20 | ○ | ○ |
| EXAMPLE 8 | COATING LAYER | ALUMINIUM OXIDE | COMPOSITION b | COMPOSITION A | 0.5 | EXTRUSION LAMINATION | LDPE | 290 | 20 | ○ | ○ |
| COMPARATIVE EXAMPLE 1 | NA | ALUMINIUM OXIDE | COMPOSITION a | COMPOSITION D | 0.5 | EXTRUSION LAMINATION | LDPE | 290 | 20 | × | ○ |
| COMPARATIVE EXAMPLE 2 | NA | ALUMINIUM OXIDE | COMPOSITION a | COMPOSITION E | 0. 5 | EXTRUSION LAMINATION | LDPE | 290 | 20 | × | ○ |
| COMPARATIVE EXAMPLE 3 | NA | ALUMINIUM OXIDE | NA | COMPOSITION A | 0. 5 | EXTRUSION LAMINATION | LDPE | 290 | 20 | Δ | Δ |
| COMPARATIVE EXAMPLE 4 | NA | SILICON OXIDE | NA | COMPOSITION A | 0.5 | EXTRUSION LAMINATION | LDPE | 290 | 20 | Δ | Δ |
| COMPARATIVE EXAMPLE 5 | NA | ALUMINIUM OXIDE | COMPOSITION c | COMPOSITION A | 0.5 | EXTRUSION LAMINATION | LDPE | 290 | 20 | × | Δ |
| COMPARATIVE EXAMPLE 6 | NA | ALUMINIUM OXIDE | COMPOSITION a | COMPOSITION A | 2. 5 | EXTRUSION LAMINATION | LDPE | 290 | 20 | × | ○ |
| COMPARATIVE EXAMPLE 7 | NA | ALUMINIUM OXIDE | COMPOSITION a | COMPOSITION A | 0. 5 | EXTRUSION LAMINATION | LDPE | 240 | 20 | × | ○ |
| COMPARATIVE EXAMPLE 8 | NA | ALUMINIUM OXIDE | COMPOSITION a | COMPOSITION A | 0. 5 | EXTRUSION LAMINATION | LDPE | 350 | 20 | ○ | × |

The components of compositions A to E in Table 1 are shown in Table 2 below.

**(Table 2)**

| | BASE RESIN | | SILANE COUPLING AGENT | |
|---|---|---|---|---|
| | MATERIAL | MASS PART | MATERIAL | MASS PART |
| COMPOSITION A | ACID ANHYDRIDE-MODIFIED POLYETHYLENE RESIN | 100 | 3-GLYCIDOXYPROPYLTRIMETHOXYSILANE | 1 |
| COMPOSITION B | ACID ANHYDRIDE-MODIFIED POLYETHYLENE RESIN | 100 | 3-GLYCIDOXYPROPYLTRIMETHOXYSILANE | 0.5 |
| COMPOSITION C | ACID ANHYDRIDE-MODIFIED POLYETHYLENE RESIN | 100 | 3-GLYCIDOXYPROPYLMETHYLDIMETHOXYSILANE | 1 |
| COMPOSITION D | TWO-COMPONENT CURABLE POLYESTER POLYURETHANE ADHESIVE | 100 | NA | - |
| COMPOSITION E | ACID ANHYDRIDE-MODIFIED POLYETHYLENE RESIN | 100 | NA | - |

### Example 1

As shown in Table 1, a polyethylene terephthalate film having a thickness of 12 µm and no surface treatment ("PET" in Table 1) was used as the base material 4A of the packaging material of Example 1.

Aluminum oxide was used as the gas barrier vapor deposition layer 4B. Aluminum oxide was formed on the base material 4A to a thickness of 15 nm by a vacuum vapor deposition method. When the abundance ratio B/A of aluminum (B) to oxygen (A) in the gas barrier vapor deposition layer 4B was measured by XPS (X-ray Photoelectron Spectroscopy), B/A=1/1.8.

Composition a was used as the material for the gas barrier coating layer 4C. Composition a was formed to include tetraethoxysilane (Si(OC₂H₅)₄, hereinafter referred to as TEOS), which is a metal alkoxide, TEOS which had been hydrolyzed in advance, and a polymer thereof, and PVA, which is a polymer compound having a hydroxy group.

The coating liquid described below was applied to the upper surface of the gas barrier vapor deposition layer 4B formed of aluminum oxide by a bar coater.

As the coating liquid, a mixed solution (gas barrier coating solution) of solutions (a) and (b) for coating liquid prepared by the following method was used. The mixing ratio of solutions (a) and (b) for coating liquid was a:b=70:30 when the masses of the respective solids were expressed as a and b.

Solution (a) for coating liquid was obtained as a hydrolyzed solution in which 17.9 g of TEOS and 10.0 g of methanol were added with 72.1 g of hydrochloric acid (0.1N), and the mixed solution was stirred for 30 minutes and hydrolyzed. The solid content of the hydrolyzed solution was 5% (mass ratio expressed in terms of SiO₂).

As solution (b) for coating liquid, an aqueous solution of 5% (mass ratio) polyvinyl alcohol and water/methanol=95/5 (mass ratio) was obtained.

After applying the above-described mixed solution, the coating film was dried at 120 °C for 1 minute by a dryer. As a result, a gas barrier coating layer 4C having a film thickness of approximately 0.3 µm was formed.

Composition A was used as the material for the adhesive layer 4D.

As shown in Table 2, in composition A, an aqueous dispersion body was obtained in which 1 portion by mass of 3-glycidoxypropyltrimethoxysilane, which is an epoxy-based silane coupling agent, was added to 100 parts by mass of the acid anhydride-modified polyethylene resin.

The adhesive layer 4D was applied onto the gas barrier coating layer 4C using the bar coating method, and then the coating film was dried by a dryer at 120 °C for 1 minute, and a film was formed such that the application amount after drying was 0.5 g/m².

As the polyolefin-based sealant layer 4E ("sealant layer" in Table 1), low-density polyethylene (LDPE) having a thickness of 20 µm was used. The polyolefin-based sealant layer 4E was laminated on the adhesive layer 4D by extrusion laminate processing at a temperature of 290 °C.

In such a manner, the lamination film 4 of Example 1 was manufactured.

The lamination film 4 of Example 1 was cut into the shapes of the first lamination film 1a and the second lamination film 1b, and then a packaging bag 1 having three heat-sealed outer peripheral portions was formed. The packaging bag 1 was filled with a highly permeable content α ("content α" in Table 1) including a highly permeable material from the opening portion.

As the highly permeable content α, l (indicating small L) menthol was used.

After the highly permeable content α was filled, the opening portion of the packaging bag 1 was heat-sealed. As a result, the packaging body 3 of Example 1 having a bag shape sealed on all sides was manufactured.

### Examples 2 to 8

### (Packaging material)

As shown in Table 1, the lamination film 4 of Example 2 was configured in the same manner as the lamination film 4 of Example 1 except that composition B was used instead of composition A as the adhesive layer 4D.

As shown in Table 2, composition B was configured in the same manner as composition A except that the amount of 3-glycidoxypropyltrimethoxysilane in composition A was changed to 0.5 parts by mass.

As shown in Table 1, the lamination film 4 of Example 3 was configured in the same manner as the lamination film 4 of Example 1 except that composition C was used instead of composition A as the adhesive layer 4D.

As shown in Table 2, composition C was configured in the same manner as composition A except that 3-glycidoxypropylmethyldimethoxysilane was used instead of the 3-glycidoxypropyltrimethoxysilane in composition A.

As shown in Table 1, the lamination film 4 of Example 4 was configured in the same manner as the lamination film 4 of Example 1 except that the material of the gas barrier vapor deposition layer 4B was changed from aluminum oxide to silicon oxide. The abundance ratio B/A of oxygen (B) with respect to silicon (A) in silicon oxide was 1.5.

The lamination film 4 of Example 5 was configured in the same manner as the lamination film 4 of Example 1 except that the gas barrier vapor deposition layer 4B was formed after the coating layer was formed on the surface of the base material 4A in order to improve the adhesion of the gas barrier vapor deposition layer 4B.

As the material of the coating layer, a solution was used in which acrylic polyol and triidyl isocyanate were added to the OH group of the acrylic polyol so that the amount of NCO group was equal, diluted with ethyl acetate so that the total solid content was 5% by mass, and β-(3,4 epoxycyclohexyl)trimethoxysilane was added in an amount of 5% by mass based on the total solid content and mixed.

The above-described mixed solution was applied to the gas barrier vapor deposition layer 4B by a bar coater and dried at 120 °C for 1 minute by a dryer to obtain a coating layer having a film thickness of approximately 0.3 µm.

The lamination film 4 of Example 6 was configured in the same manner as the lamination film 4 of Example 1 except that the gas barrier vapor deposition layer 4B was formed after oxygen plasma treatment was performed on the surface of the base material 4A in order to improve the adhesion of the gas barrier vapor deposition layer 4B.

The lamination film 4 of Example 7 was configured in the same manner as the lamination film 4 of Example 1 except that composition b was used as the material of the gas barrier coating layer 4C.

Composition b was formed by using a gas barrier coating solution in which solution (c) for coating liquid described later was added to solutions (a) and (b) for coating liquid described in Example 1.

As solution (c) for coating liquid, a solution in which 1, 3, 5-tris(3-methoxysilylpropyl)isocyanurate was diluted and adjusted with a solution of water/IPA=1/1 to have a solid content of 5% (weight ratio in terms of R₂Si(OH)₃) was used.

The mixing ratio of solutions (a), (b), and (c) for coating liquid was A: B: C=100: 20:10 when the masses of the respective solids were expressed as A, B, and C. Here, A is the solid content of SiO₂ of TEOS (converted value), B is the solid content of PVA, and C is the solid content of R²Si(OH)₃ of 1,3,5-tris(3-methoxysilylpropyl)isocyanurate (converted value). The composition b was formed by using this coating liquid in the same manner as the gas barrier coating layer of composition a.

The lamination film 4 of Example 8 was configured in the same manner as the lamination film 4 of Example 7 except that the gas barrier vapor deposition layer 4B was formed after the coating layer was formed on the surface of the base material 4A similar to Example 5 in order to improve the adhesion of the gas barrier vapor deposition layer 4B.

### (Packaging body)

The packaging body 3 of Examples 2 to 8 was manufactured in the same manner as the packaging body 3 of Example 1 except that the packaging bag 1 was manufactured by the lamination film 4 of Examples 2 to 8.

### Comparative Examples 1 to 8

### (Packaging Material)

The lamination films of Comparative Examples 1 and 2 were configured in the same manner as the lamination film 4 of Example 1 except that compositions D and E were used instead of composition A as the respective adhesive layer 4D. The application amount of the adhesive layers of Comparative Examples 1 and 2 after drying was 0.5 g/m².

As shown in Table 2, a two-component curable polyester polyurethane-based resin was used as composition D.

The solid content concentration of composition D was 30% by mass, and composition D was applied using a bar coater so that the application amount after drying was 0.5 g/m², and then dried at 120 °C for 1 minute. As a result, the adhesive layer of Comparative Example 1 was formed.

Composition E was composed of an acid-modified polyethylene resin including no silane coupling agent. As the material of the acid-modified polyethylene resin, the same material as the acid-modified polyethylene resin of Composition A was used.

As shown in Table 1, the lamination films of Comparative Examples 3 and 4 were configured in the same manner as in Examples 1 and 4, respectively, except that no gas barrier coating layer was included.

The lamination film of Comparative Example 5 was configured in the same manner as the lamination film 4 of Example 1 except that the composition c was used as the material of the gas barrier coating layer.

For composition c, a polyester-based aqueous emulsion was used as an overcoat. The solid content concentration of composition c was 30% by mass. Composition c was applied using a bar coater so that the film thickness after drying was 0.3 µm, and then dried at 120 °C for 1 minute. As a result, the non-gas barrier coating layer of Comparative Example 5 was formed.

The lamination film of Comparative Example 6 was configured in the same manner as the lamination film 4 of Example 1 except that the coating amount of the adhesive layer after drying was 2.5 g/m².

The lamination film of Comparative Example 7 was configured in the same manner as the lamination film 4 of Example 1 except that the temperature at the time of extrusion lamination was set to be 240 °C.

The lamination film of Comparative Example 8 was configured in the same manner as the lamination film 4 of Example 1 except that the temperature at the time of extrusion lamination was set to be 350 °C.

### (Packaging Body)

The packaging bodies of Comparative Examples 1 to 8 were manufactured in the same manner as the packaging body 3 of Example 1 except that the same packaging bag as the packaging bag 1 was manufactured by the lamination film of Comparative Examples 1 to 8.

### (Evaluation)

As an evaluation of each Example and each Comparative Example, each packaging bag was stored at 40 °C and 90% for one month, and then opened. It was investigated whether or not the lamination film of the opened packaging bag was deteriorated due to the influence of the contents. In particular, the lamination strength and the water vapor barrier performance of the lamination film were investigated

Evaluations were performed in three stages which are good (described as "∘" in Table 1), bad (described as "△" in Table 1), and very bad (described as "x" in Table 1).

The laminate strength was measured based on JIS Z1707. The contents of each stage are as follows.
"Good": 5N/15 mm or more
"Bad": Range between "Good" and "Very bad"
"Very bad": 2N/15 mm or less

The water vapor barrier performance was measured based on JIS Z7129. The contents of each stage are as follows.
"Good": 0.5 g/m²/day or less
"Bad": Range between "Good" and "Very bad"
"Very bad": 1.0 g/m²/day or more

### (Evaluation Results)

As shown in Table 1, Examples 1 to 8 were evaluated as "good" in both the laminate strength and the water vapor barrier performance.

On the other hand, in Comparative Examples 3 and 4, the elongation of LDPE of the extruded laminated resin, which was considered to be due to the lamination strength, was observed, and both the laminating strength and the water vapor barrier performance were evaluated as "bad".

In Comparative Examples 1, 2, 5, 6 and 7, the lamination strength was evaluated as "very bad" because delamination had occurred.

In Comparative Example 8, the resin having high fluidity due to high-temperature extrusion destroyed the gas barrier vapor deposition layer, so that the water vapor barrier performance was evaluated as "very bad".

From the above-described results, it is confirmed that in Examples 1 to 8, even if the contents to be packaged were highly permeable contents, the decrease in the lamination strength due to the influence of the highly permeable contents was suppressed, and the water vapor barrier performance was also maintained.

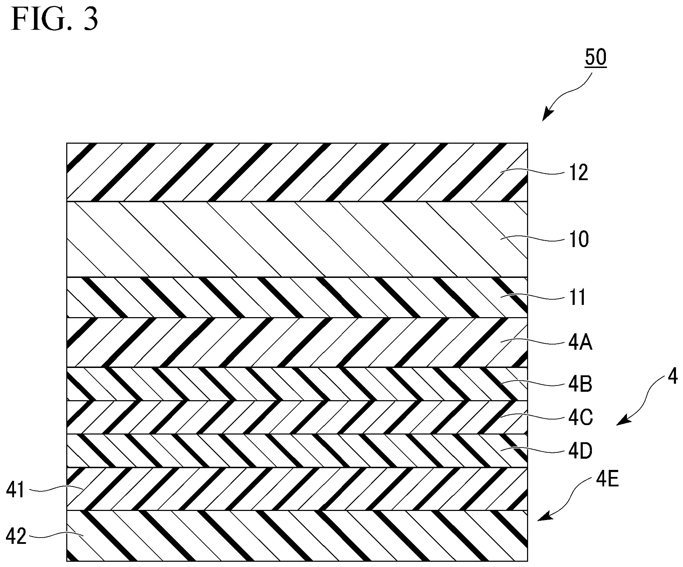

A second embodiment of the present invention will be described with reference to FIGS. 3 to 5. In the following descriptions, the same reference numerals will be given to the configurations common to those already described, and duplicate description will be omitted.

FIG. 3 is a schematic cross-sectional view of the packaging material 50 according to the present embodiment. The packaging material 50 has a structure in which the lamination film 4 of the first embodiment and a paper sheet 10 are bonded to each other.

As the paper constituting the sheet 10, paper having a basis weight of 200 to 500 g/m² and a density of 0.6 to 1.1 g/cm³ was appropriately selected and used depending on the size and the like of the paper container to be formed. If the basis weight is less than 200 g/m², it may not be possible to obtain sufficient rigidity and strength as a container. If it exceeds 500 g/m², the processing suitability for molding into a container is inferior, and it is not economically preferable.

A surface resin layer 12 is formed on one surface of the sheet. The surface resin layer 12 constitutes the outer surface of the paper container for liquid described later, and is made of a polyolefin resin. The thickness of the surface resin layer 12 can be, for example, approximately10 to 50 µm. The surface resin layer 12 can be formed by an extrusion lamination method.

The polyolefin-based sealant layer 4E of the lamination film 4 shown in FIG. 3 includes a polyolefin resin layer 41 and a polyolefin resin-based sealant film 42, and is formed by the sand-lamination method or back-lamination method of the extrusion lamination described above. The thickness of the polyolefin-based sealant layer 4E can be, for example, approximately 40 to 100 µm. This is one example, and the configuration of the polyolefin-based sealant layer 4E may be any of the aspects described in the first embodiment.

The lamination film 4 is arranged so that a side of the base material 4A faces the sheet 10. The lamination film 4 and the sheet 10 are integrally bonded by the bonding resin layer 11 on a surface opposite to the surface resin layer 12. The bonding resin layer 11 can be formed of a polyolefin resin. The thickness of the bonding resin layer 11 can be, for example, approximately10 to 50 µm. The bonding resin layer 11 can be formed by an extrusion lamination method.

Specific examples used for forming the surface resin layer 12, the bonding resin layer 11, and the polyolefin resin layer 41 are a single substance or a blend of two or more resins selected from the following including polyethylene-based resins such as low-density polyethylene (LDPE), linear low-density polyethylene (LLDPE), medium-density polyethylene (MDPE), high-density polyethylene (HMPE), and ethylene-α olefin polymers, and the like, polypropylene-based resins such as homopolypropylene resins, propylene-ethylene random copolymers, propylene-ethylene block copolymer resins, propylene-α-olefin copolymers, and further, ethylene-α, β-unsaturated carboxylic acid copolymers such as ethylene-acrylic acid copolymer (EAA) and ethylene-methacrylic acid copolymer (EMAA), copolymers with esterified products of ethylene-α, β unsaturated carboxylic acid copolymers such as ethylene-methyl acrylate, ethylene-ethyl acrylate, ethylene-methyl methacrylate, and ethylene-ethyl methacrylate, ion-crosslinked products of ethylene-α, β-unsaturated carboxylic acid copolymer in which the carboxylic acid moiety is crosslinked with sodium ion or zinc ion, modified polyolefin resins obtained by acid-modifying olefin resins such as ethylene-maleic anhydride graft polymers and acid anhydride-modified polyolefins represented by ternary copolymers such as ethylene-ethyl acrylate-maleic anhydride by graft polymerization or the like, epoxy compound-modified polyolefins such as ethylene-glycidyl methacrylate copolymer, and ethylene-vinyl acetate copolymers.

The above-described resin may be subjected to single-layer melt extrusion or two or more layers of common melt extrusion.

The resin temperature under the T die when melt-extruded by the extrusion lamination method is preferably 250 °C to 330 °C. When the temperature is 250 °C or lower, the adhesive strength between the layers is lowered due to insufficient oxidation of the extruded polyolefin resin. When the temperature is 330 °C or higher, the cohesive force of the extruded resin decreases, and the adhesive strength between the layers decreases.

In addition, it is also possible to perform ozone treatment by flowing ozone in or near the portion where the resin extruded from the T-die, or to perform surface activation treatment such as corona treatment for bonding.

Since the bonding resin layer 11 is in contact with the base material 4A, among the above, the examples preferably include a single layer or two or more layers subjected to common melt extrusion of a single substance or a blend of two or more resins selected from the following including ethylene-α, β-unsaturated carboxylic acid copolymers such as ethylene-acrylic acid copolymer (EAA) and ethylene-methacrylic acid copolymer (EMAA), copolymers with esterified products of ethylene-α, β unsaturated carboxylic acid copolymers such as ethylene-methyl acrylate, ethylene-ethyl acrylate, ethylene-methyl methacrylate, and ethylene-ethyl methacrylate, ion-crosslinked products of ethylene-α, β-unsaturated carboxylic acid copolymer in which the carboxylic acid moiety is crosslinked with sodium ion or zinc ion, modified polyolefin resins obtained by acid-modifying olefin resins such as ethylene-maleic anhydride graft polymers and acid anhydride-modified polyolefins represented by ternary copolymers such as ethylene-ethyl acrylate-maleic anhydride by graft polymerization or the like, epoxy compound-modified polyolefins such as ethylene-glycidyl methacrylate copolymer, and ethylene-vinyl acetate copolymers.

The packaging material 50 was manufactured by preparing a sheet 10 on which the surface resin layer 12 is formed and a lamination film 4, and joining the sheet 10 and the lamination film 4 while forming the bonded resin layer 11 by an extrusion lamination method.

If necessary, after the sheet 10 and the lamination film 4 are joined, heating and pressurization may be performed by a thermal lamination method to further strengthen the adhesive strength.

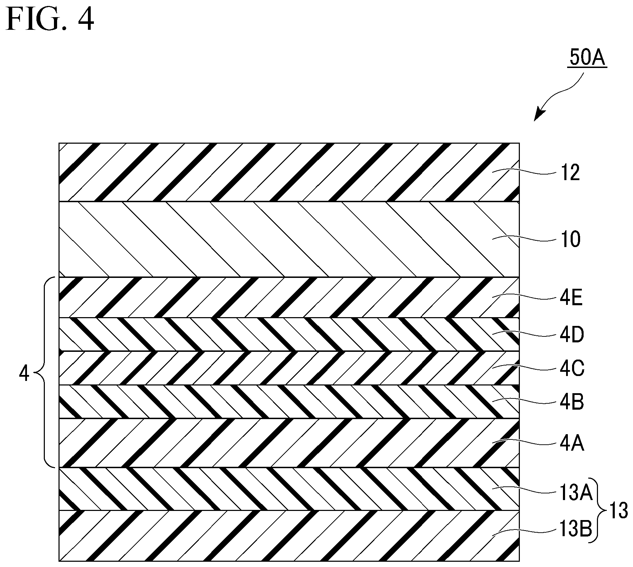

FIG. 4 shows another example of the packaging material. In the packaging material 50A shown in the drawing, the lamination film 4 and the sheet 10 are bonded by the polyolefin-based sealant layer 4E of the lamination film 4. A container sealant layer 13 having a polyolefin resin layer 13A and a polyolefin resin-based sealant film 13B is formed on the surface of the base material 4A that does not face the sheet 10 by an extrusion laminating sand lamination method. The materials of the polyolefin resin layer 13A and the polyolefin resin-based sealant film 13B can be the same as those of the polyolefin resin layer 41 and the polyolefin resin-based sealant film 42 in the packaging material 50. In this case, since the polyolefin resin layer 41 is in contact with the base material 4A, similar to the bonding resin layer 11, examples thereof are a single layer or two or more layers subjected to common melt extrusion of a single substance or a blend of two or more resins selected from the following including ethylene-α, β-unsaturated carboxylic acid copolymers such as ethylene-acrylic acid copolymer (EAA) and ethylene-methacrylic acid copolymer (EMAA), copolymers with esterified products of ethylene-α, β unsaturated carboxylic acid copolymers such as ethylene-methyl acrylate, ethylene-ethyl acrylate, ethylene-methyl methacrylate, and ethylene-ethyl methacrylate, ion-crosslinked products of ethylene-α, β-unsaturated carboxylic acid copolymer in which the carboxylic acid moiety is crosslinked with sodium ion or zinc ion, modified polyolefin resins obtained by acid-modifying olefin resins such as ethylene-maleic anhydride graft polymers and acid anhydride-modified polyolefins represented by ternary copolymers such as ethylene-ethyl acrylate-maleic anhydride by graft polymerization or the like, epoxy compound-modified polyolefins such as ethylene-glycidyl methacrylate copolymer, and ethylene-vinyl acetate copolymers.

When manufacturing the packaging material 50A, a portion of the lamination film 4 excluding the polyolefin-based sealant layer 4E is prepared. After forming a container sealant layer 13 on the portion by a sand lamination method of an extrusion laminate, the sheet 10 on which the surface resin layer 12 is formed and the lamination film 4 are bonded while forming a polyolefin-based sealant layer 4E by a sand lamination method of an extrusion laminate, and thereby, the packaging material 50A can be manufactured.

At this time, the adhesive layer 4D may be formed in advance and dried, or may be formed in the same step of forming the polyolefin-based sealant layer 4E by the extrusion lamination method.

If necessary, after the sheet 10 and the lamination film 4 are bonded, heating and pressurization may be performed by a thermal lamination method to further strengthen the adhesive strength.

The packaging material 50 and the packaging material 50A can be used as a blank for a paper container for liquid by providing creases by pressing or the like and punching them into a predetermined shape. When the blank is bent along the creases, assembled, and the necessary portions are heat-sealed, a paper container for liquid made of the packaging material of the present embodiment can be manufactured.

Since the paper container for liquid according to the present embodiment is manufactured by using the lamination film 4, the lamination strength of the gas barrier vapor deposition layer 4B, and the gas barrier coating layer 4C and the polyolefin sealant layer 4E is good. Therefore, even if the contents are filled with various kinds of highly permeable contents including volatile substances such as perm solution, detergent, concentrated detergent, shampoo, rinse, bath salt, fragrance, and the like, the paper container for liquid according to the present embodiment can be preferably used as a paper container for liquid for heavy contents or as a paper container for liquid for long-term storage without reducing the lamination strength between the layer 4B, and the gas barrier coating layer 4C and the polyolefin-based sealant layer 4E. In addition, the paper container for liquid according to the present embodiment has excellent barrier performance against vapor and the like.

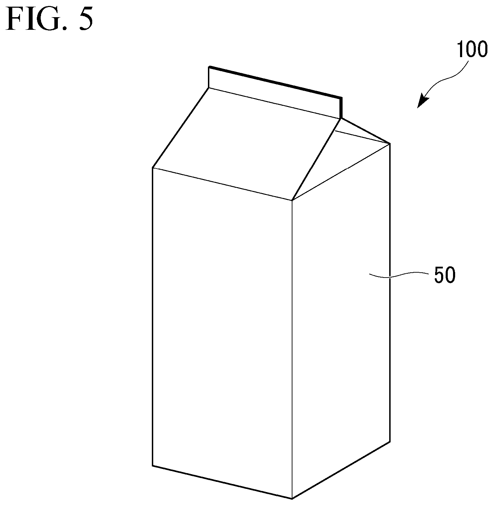

FIG. 5 shows a Goebel top-type paper container for liquid 100 as an example of a paper container for liquid using the packaging material 50. When manufacturing the paper container for liquid 100, the above-described blank is folded to manufacture a tubular body. Next, a bottom portion is formed to manufacture a container having a bottom portion. The container having a bottom portion is filled with the contents, and the upper opening portion is folded and sealed to form a top surface portion. As a result, the paper container for liquid (packaging body) 100 filled and sealed with the contents is completed.

The shape of the paper container for liquid is not limited to the above-described Goebel top-type, and may be a flat top-type in which the upper portion is folded flat, or any other appropriate shape.

In the present embodiment, a portion of the surface resin layer 12 is joined to the polyolefin-based sealant layer 4E and the container sealant layer 13 by heat fusion when the paper container for liquid is manufactured. Therefore, the material of the surface resin layer 12 is preferably one that can be heat-sealed with the corresponding polyolefin sealant layer 4E and the container sealant layer 13.

The surface resin layer 12 and the polyolefin-based sealant layer 4E may be blended with a low-crystalline rubber component.

In the present embodiment, the container sealant layer 13 and the polyolefin-based sealant layer 4E (the innermost layer thereof when these layers are composed of a plurality of layers), which is the inner surface of the paper container for liquid, are preferably formed of a polyolefin (metallocene-based polyolefin) polymerized using a single-site catalyst such as a metallocene catalyst. It is known that ethylene-based polymers and propylene-based polymers can control structural characteristics such as molecular weight, molecular weight distribution, and branched structure by selecting a catalyst, and those skilled in the art also can distinguish the types of the polymer depending on the kind of catalyst. Since the polyolefin using the single-site catalyst has a uniform molecular weight distribution, the seal strength can be stabilized.

Hereinafter, the second embodiment will be further described with reference to Examples and Comparative Examples.

The following Table 3 shows the layer structure and evaluation results of the lamination film in the packaging materials of Examples 9 and 10 and Comparative Examples 9 and 10.

**(Table 3)**

| | | | | | | | EVALUATION | |
|---|---|---|---|---|---|---|---|---|
| | SURFACE TREATMENT OF BASE MATERIAL | VAPOR-DEPOSITED MATERIAL HAVING GAS BARRIER PERFORMANCE | COATING-LAYER MATERIAL HAVING GAS BARRIER PERFORMANCE | ADHESIVE LAYER | | SEALANT LAYER | LAMINATION STRENGTH | WATER VAPOR BARRIER PERFORMANCE |
| | | | | MATERIAL | COATING AMOUNT (g/m²) | MATERIAL | | |
| EXAMPLE 9 | NA | ALUMINIUM OXIDE | COMPOSITION a | COMPOSI TION A | 0.5 | ETHYLENE- α -OLEFIN COPOLYMER POLYMERIZED USING METALLOCENE CATALYST | ○ | ○ |
| EXAMPLE 10 | COATING LAYER | ALUMINIUM OXIDE | COMPOSITION b | COMPOS ITION A | 0.5 | ETHYLENE- α -OLEFIN COPOLYMER POLYMERIZED USING METALLOCENE CATALYST | ○ | ○ |
| COMPARATIVE EXAMPLE 9 | NA | ALUMINIUM OXIDE | COMPOSITION a | COMPOSI TION D | 0.5 | ETHYLENE- α -OLEFIN COPOLYMER POLYMERIZED USING METALLOCENE CATALYST | × | ○ |
| COMPARATIVE EXAMPLE 10 | NA | ALUMINIUM OXIDE | COMPOSITION a | COMPOSI TION E | 0.5 | ETHYLENE- α -OLEFIN COPOLYMER POLYMERIZED USING METALLOCENE CATALYST | × | ○ |

### Example 9

A lamination film similar to that of Example 1 was prepared except that an ethylene-α-olefin copolymer polymerized using a metallocene catalyst was used as the sealant layer.

As the sheet 10, a milk carton base paper having a basis weight of 400 g/m² was prepared. A surface resin layer 12 having a thickness of 20 µm made of LDPE was formed on one surface of the sheet 10 by an extrusion lamination method.

The substrate of the lamination film is opposed to the surface of the sheet 10 where the surface resin layer 12 is not provided, and the lamination film and the sheet are bonded by extrusion lamination (extrusion temperature 290 °C) using an ethylene-unsaturated carboxylic acid copolymer. As a result, the packaging material of Example 9 having the bonding resin layer 11 having a thickness of 20 µm was manufactured.

### Example 10

A lamination film similar to that of Example 8 was prepared except that an ethylene-α-olefin copolymer polymerized using a metallocene catalyst was used as the sealant layer. The lamination film was bonded to the sheet 10 in the same manner as in Example 9 to manufacture the packaging material of Example 10.

### Comparative Example 9

A lamination film similar to that of Comparative Example 1 was prepared except that an ethylene-α-olefin copolymer polymerized using a metallocene catalyst was used as the sealant layer. This lamination film was bonded to the sheet 10 in the same manner as in Example 9 to manufacture the packaging material of Comparative Example 9.

### Comparative Example 10

A lamination film similar to that of Comparative Example 2 was prepared except that an ethylene-α-olefin copolymer polymerized using a metallocene catalyst was used as the sealant layer. This lamination film was bonded to the sheet 10 in the same manner as in Example 9 to manufacture the packaging material of Comparative Example 10.

The packaging materials of each Example and Comparative Example were punched into a predetermined shape to manufacture a blank, and a Goebel top-type paper container for liquid according to each example was manufactured. The container was filled with the above-described content α and sealed to manufacture a packaging body according to each example.

For the packaging bags of each example, the laminate strength and the water vapor barrier performance were evaluated in the same manner as in the examples according to the first embodiment.

As shown in Table 3, Examples 9 and 10 were evaluated as "good" in both the laminate strength and the water vapor barrier performance.

On the other hand, in Comparative Examples 9 and 10, the lamination strength was evaluated as "very bad" because delamination occurred.

From the above-described results, in the paper container for liquid according to the second embodiment, even if the content to be packaged is highly permeable, a decrease in lamination strength due to the influence of the highly permeable content is suppressed, and it can be seen that a water vapor barrier is also maintained.

Although preferred embodiments and examples of the present invention have been described above, the present invention is not limited to the present embodiments and examples.

In addition, the present invention is not limited by the above description and is limited only by the appended claims.

### INDUSTRIAL APPLICABILITY

The present invention can be applied to packaging materials and packaging bodies.

### DESCRIPTION OF THE REFERENCE SYMBOLS

1: Packaging bag
1a: First lamination film
1b: Second lamination film
1c: Heat-sealed portion
1d: Spout portion
2: Highly permeable contents
3: Packaging body
4: Lamination film (packaging material)
4A: Base material
4B: Gas barrier vapor deposition layer
4C: Gas barrier coating layer
4D: Adhesive layer
4E: Polyolefin sealant layer
10: Sheet
50, 50A: Packaging material
100: Paper container for liquid

## Claims

1. A packaging material (50, 50A) comprising:
a base material (4A) made of a polymer resin composition;
a gas barrier vapor deposition layer (4B) made of an inorganic compound;
a gas barrier coating layer (4C) formed by using a compound comprising at least one compound selected from a metal alkoxide, a hydrolyzate of a metal alkoxide, and a polymer of a metal alkoxide, and a hydroxy group-containing polymer compound;
an adhesive layer (4D) comprising an acid-modified polyolefin resin and a silane coupling agent, and formed in contact with the gas barrier coating layer (4C); and
a polyolefin sealant layer (4E),
wherein the base material (4A) and the layers (4B, 4C, 4D, 4E) are laminated in the above order and wherein, if the polyolefin-based sealant layer (4E) is laminated by an extrusion lamination method, the extrusion lamination method has an extrusion temperature of 250°C to 330°C, and
a coating amount of the adhesive layer (4D) after drying is 0.1 to 2.0 g/m².

2. The packaging material (50, 50A) according to Claim 1, wherein
the gas barrier coating layer (4C) is a composition formed by using a composition comprising at least one compound selected from a metal alkoxide, a hydrolyzate of a metal alkoxide, and a polymer of a metal alkoxide, and a hydroxy group-containing polymer compound, and further using at least one compound selected from an isocyanate derivative, a hydrolyzate of an isocyanate derivative, and a polymer of an isocyanate derivative.

3. The packaging material (50, 50A) according to Claim 1 or 2, wherein in the adhesive layer (4D), the silane coupling agent is 0.2 parts by mass or more and 2.0 parts by mass or less with respect to 100 parts by mass of the acid-modified polyolefin resin.

4. The packaging material (50, 50A) according to any one of Claims 1 to 3, wherein the silane coupling agent is an epoxy-based silane coupling agent.

5. The packaging material (50, 50A) according to Claim 4, wherein the epoxy-based silane coupling agent is made of at least one compound selected from a group constituted by 3-glycidoxypropyltrimethoxysilane, 3-glycidoxypropylmethyldimethoxysilane, or 3-glycidoxypropyltriethoxysilane.

6. The packaging material (50, 50A) according to any one of Claims 1 to 5, wherein the gas barrier vapor deposition layer (4B) comprises at least one of silicon oxide and aluminum oxide.

7. The packaging material (50, 50A) according to any one of Claims 1 to 6, wherein the metal alkoxide is made of least one compound selected from the group constituted by tetraethoxysilane, tetramethoxysilane, and triisopropoxyaluminum.

8. A packaging body (3) comprising:
a packaging bag (1) formed of the packaging material (50, 50A) according to any one of Claims 1 to 7; and
a highly permeable content (2) accommodated in the packaging bag (1) and comprising a highly permeable material which is a substance having high permeability to the packaging material (50, 50A).

9. The packaging material (50, 50A) according to any one of Claims 1 to 7, further comprising a paper sheet (10).

10. A packaging body (3) comprising:
a paper container (100) for liquid formed of the packaging material (50, 50A) according to Claim 9; and
a highly permeable content (2) accommodated in the packaging bag and comprising a highly permeable material which is a substance having high permeability to the packaging material (50, 50A).

11. A method of manufacturing the packaging material (50, 50A) according to Claim 1 or 9, wherein the polyolefin-based sealant layer (4E) is laminated by an extrusion lamination method having an extrusion temperature of 250°C to 330°C.

## Patentansprüche

1. Verpackungsmaterial (50, 50A), das umfasst:
ein Basismaterial (4A) hergestellt aus einer Polymerharzzusammensetzung;
eine Gasbarrieredampfabscheidungsschicht (4B) hergestellt aus einer anorganischen Verbindung;
eine Gasbarrierebeschichtungsschicht (4C), die unter Verwendung einer Verbindung, die mindestens eine Verbindung ausgewählt aus einem Metallalkoxid, einem Hydrolysat eines Metallalkoxids und einem Polymer eines Metallalkoxids umfasst, und einer Hydroxylgruppe-enthaltenden Polymerverbindung, gebildet wird;
eine Klebeschicht (4D), die ein säuremodifiziertes Polyolefinharz und ein Silan-Haftvermittler umfasst und in Kontakt mit der Gasbarrierebeschichtungsschicht (4C) gebildet ist; und
eine Polyolefin-Versiegelungsschicht (4E),
wobei das Basismaterial (4A) und die Schichten (4B, 4C, 4D, 4E) in der oben genannten Reihenfolge laminiert sind und wobei, falls die Polyolefin-basierte Versiegelungsschicht (4E) durch ein Extrusionslaminierverfahren laminiert wird, das Extrusionslaminierverfahren eine Extrusionstemperatur von 250 °C bis 330 °C aufweist und
die Beschichtungsmenge der Klebeschicht (4D) nach dem Trocknen 0,1 bis 2,0 g/m² beträgt.

2. Verpackungsmaterial (50, 50A) nach Anspruch 1, wobei
die Gasbarrierebeschichtungsschicht (4C) eine Zusammensetzung ist, die gebildet ist unter Verwendung einer Zusammensetzung, die mindestens eine Verbindung ausgewählt aus einem Metallalkoxid, ein Hydrolysat eines Metallalkoxids und ein Polymer eines Metallalkoxids umfasst, und einer Hydroxylgruppe-enthaltenden Polymerverbindung, und unter weiterer Verwendung mindestens einer Verbindung ausgewählt aus einem Isocyanatderivat, einem Hydrolysat eines Isocyanatderivats und einem Polymer eines Isocyanatderivats.

3. Verpackungsmaterial (50, 50A) nach Anspruch 1 oder 2, wobei in der Klebeschicht (4D) der Silan-Haftvermittler 0,2 Massenteile oder mehr und 2,0 Massenteile oder weniger, bezogen auf 100 Massenteile des säuremodifizierten Polyolefinharzes, beträgt.

4. Verpackungsmaterial (50, 50A) nach einem der Ansprüche 1 bis 3, wobei der Silan-Haftvermittler ein Epoxid-basierter Silan-Haftvermittler ist.

5. Verpackungsmaterial (50, 50A) nach Anspruch 4, wobei der Epoxidbasierte Silan-Haftvermittler hergestellt ist aus mindestens einer Verbindung ausgewählt aus einer Gruppe gebildet aus 3-Glycidoxypropyltrimethoxysilan, 3-Glycidoxypropylmethyldimethoxysilan oder 3-Glycidoxypropyltriethoxysilan.

6. Verpackungsmaterial (50, 50A) nach einem der Ansprüche 1 bis 5, wobei die Gasbarrieredampfabscheidungsschicht (4B) mindestens eines von Siliciumoxid und Aluminiumoxid umfasst.

7. Verpackungsmaterial (50, 50A) nach einem der Ansprüche 1 bis 6, wobei das Metallalkoxid hergestellt ist aus mindestens einer Verbindung ausgewählt aus einer Gruppe gebildet aus Tetraethoxysilan, Tetramethoxysilan und Triisopropoxyaluminium.

8. Verpackungskörper (3), der umfasst:
einen Verpackungsbeutel (1), der aus dem Verpackungsmaterial (50, 50A) nach einem der Ansprüche 1 bis 7 gebildet ist; und
einen hochdurchlässigen Inhalt (2), der in dem Verpackungsbeutel (1) untergebracht ist und ein hochdurchlässiges Material umfasst, bei dem es sich um eine Substanz mit hoher Durchlässigkeit gegenüber dem Verpackungsmaterial (50, 50A) handelt.

9. Verpackungsmaterial (50, 50A) nach einem der Ansprüche 1 bis 7, das ferner ein Papierblatt (10) umfasst.

10. Verpackungskörper (3), der umfasst:
einen Papierbehälter (100) für Flüssigkeiten, der das Verpackungsmaterial (50, 50A) nach Anspruch 9 umfasst; und
einen hochdurchlässigen Inhalt (2), das in dem Verpackungsbeutel untergebracht ist und ein hochdurchlässiges Material umfasst, bei dem es sich um eine Substanz mit hoher Durchlässigkeit gegenüber dem Verpackungsmaterial (50, 50A) handelt.

11. Verfahren zur Herstellung des Verpackungsmaterials (50, 50A) nach Anspruch 1 oder 9, wobei die Polyolefin-basierte Versiegelungsschicht (4E) durch ein Extrusionslaminierverfahren mit einer Extrusionstemperatur von 250 °C bis 330 °C laminiert wird.

## Revendications

1. Matériau d'emballage (50, 50A) comprenant :
un matériau de base (4A) fait d'une composition de résine polymère ;
une couche de barrière aux gaz déposée en phase vapeur (4B), fait d'un composé inorganique ;
une couche de revêtement de barrière aux gaz (4C) formée en utilisant un composé comprenant au moins un composé choisi parmi un alcoxyde métallique, un hydrolysat d'un alcoxyde métallique et un polymère d'un alcoxyde métallique, et un composé polymère contenant des groupes hydroxy ;
une couche adhésive (4D) comprenant une résine polyoléfine modifiée par un acide et un agent de couplage silane, et formée en contact avec la couche de revêtement de barrière aux gaz (4C) ; et
une couche d'étanchéité en polyoléfine (4E),
dans lequel le matériau de base (4A) et les couches (4B, 4C, 4D, 4E) sont stratifiés dans l'ordre susmentionné et dans lequel, si la couche d'étanchéité à base de polyoléfine (4E) est stratifiée par un procédé de stratification par extrusion, le procédé de stratification par extrusion a une température d'extrusion de 250 °C à 330 °C, et
une quantité de revêtement de la couche adhésive (4D) après séchage est de 0,1 à 2,0 g/m².

2. Matériau d'emballage (50, 50A) selon la revendication 1, dans lequel
la couche de revêtement de barrière aux gaz (4C) est une composition formée en utilisant une composition comprenant au moins un composé choisi parmi un alcoxyde métallique, un hydrolysat d'un alcoxyde métallique et un polymère d'un alcoxyde métallique, et un composé polymère contenant des groupes hydroxy, et en utilisant en outre au moins un composé choisi parmi un dérivé d'isocyanate, un hydrolysat d'un dérivé d'isocyanate et un polymère d'un dérivé d'isocyanate.

3. Matériau d'emballage (50, 50A) selon la revendication 1 ou 2, dans lequel, dans la couche adhésive (4D), l'agent de couplage silane est de 0,2 parties en masse ou plus et de 2,0 parties en masse ou moins par rapport à 100 parties en masse de la résine polyoléfine modifiée par un acide.

4. Matériau d'emballage (50, 50A) selon une quelconque des revendications 1 à 3, dans lequel l'agent de couplage silane est un agent de couplage silane à base d'époxy.

5. Matériau d'emballage (50, 50A) selon la revendication 4, dans lequel l'agent de couplage silane à base d'époxy est fait d'au moins un composé choisi parmi un groupe constitué par le 3-glycidoxypropyltriméthoxysilane, le 3-glycidoxypropylméthyldiméthoxysilane ou le 3-glycidoxypropyltriéthoxysilane.

6. Matériau d'emballage (50, 50A) selon une quelconque des revendications 1 à 5, dans lequel la couche de barrière aux gaz déposée en phase vapeur (4B) comprend au moins un parmi l'oxyde de silicium et l'oxyde d'aluminium.

7. Matériau d'emballage (50, 50A) selon une quelconque des revendications 1 à 6, dans lequel l'alcoxyde métallique est fait d'au moins un composé choisi parmi le groupe constitué par le tétraéthoxysilane, le tétraméthoxysilane et le triisopropoxyaluminium.

8. Corps d'emballage (3) comprenant :
un sachet d'emballage (1) formé du matériau d'emballage (50, 50A) selon une quelconque des revendications 1 à 7 ; et
un contenu hautement perméable (2) logé dans le sachet d'emballage (1) et comprenant un matériau hautement perméable, qui est une substance ayant une perméabilité élevée au matériau d'emballage (50, 50A).

9. Matériau d'emballage (50, 50A) selon l'une quelconque des revendications 1 à 7, comprenant en outre une feuille de papier (10).

10. Corps d'emballage (3) comprenant :
un conteneur en papier (100) pour un liquide, formé du matériau d'emballage (50, 50A) selon la revendication 9 ; et
un contenu hautement perméable (2) logé dans le sachet d'emballage et comprenant un matériau hautement perméable, qui est une substance ayant une perméabilité élevée au matériau d'emballage (50, 50A).

11. Procédé de fabrication du matériau d'emballage (50, 50A) selon la revendication 1 ou 9, dans lequel la couche d'étanchéité à base de polyoléfine (4E) est stratifiée par un procédé de stratification par extrusion ayant une température d'extrusion de 250 °C à 330 °C.
